Europäisches Patentamt

European Patent Office

Office européen des brevets

(11) Veröffentlichungsnummer: **0 371 301 A2**

# (12) EUROPÄISCHE PATENTANMELDUNG

(21) Anmeldenummer: 89120935.5

(22) Anmeldetag: 11.11.89

(51) Int. Cl.5: **B42D 15/02**

(30) Priorität: 29.11.88 CH 4421/88

(43) Veröffentlichungstag der Anmeldung:
06.06.90 Patentblatt 90/23

(84) Benannte Vertragsstaaten:
**DE ES FR GB IT NL SE**

(71) Anmelder: **INTERNATIONAL STUDENT TRAVEL CONFEDERATION (ISTC)**
**Weinbergstrasse 31**
**CH-8006 Zürich(CH)**

(72) Erfinder: **Silberschmidt, Ursula M.**
**Büchnerstrasse 28**
**CH-8006 Zürich(CH)**
Erfinder: **Karrer-Hug, Brigitte**
**Würzgrabenstrasse 6**
**CH-8048 Zürich(CH)**
Erfinder: **Palla, Fernando**
**Seestrasse 292**
**CH-8038 Zürich(CH)**

(74) Vertreter: **Blum, Rudolf Emil Ernst et al**
**c/o E. Blum & Co Patentanwälte Vorderberg 11**
**CH-8044 Zürich(CH)**

(54) Verfahren zur Herstellung einer Ausweiskarte sowie nach dem Verfahren hergestellte Ausweiskarte.

(57) Auf einen mit einem Muster (11) bedruckten Kunststoffträger (1) mit den Dimensionen einer Kreditkarte wird eine selbstklebende Kunststoffolie (2) aufgeklebt. Diese Kunststoffolie (82) wird vor der Aufklebung mittels einer Schreibmaschine, von Hand oder endlos mit den Personalien des Karteninhabers beschriftet. Beim Aufkleben wird eine Fotografie (3) zwischen dem Kunststoffträger (1) und der Folie (2) angeordnet. Diese Ausweiskarte lässt sich sehr einfach und ohne maschinelle Hilfsmittel herstellen.

Fig.2

**Verfahren zur Herstellung einer Ausweiskarte sowie nach dem Verfahren hergestellte Ausweiskarte**

Die Erfindung betrifft ein Verfahren zur Herstellung einer eine Fotografie tragenden Ausweiskarte. Ferner betrifft die Erfindung eine nach dem Verfahren hergestellte Ausweiskarte.

Es sind verschiedene Arten von Ausweiskarten bekannt. Von den üblichen Kreditkarten und Bankkundenkarten (z.B. Eurocheque-Karte) her, sind bedruckbare und prägbare Kunststoffkarten bekannt, welche auch mit Magnetstreifen versehen sein können. Diese Ausweiskarten müssen mit speziellen Prägemaschinen beschriftet werden und tragen keine Fotografie des Karteninhabers. Eine eine Fotografie tragende Karte kann gemäss der CH-PS 646 647 dadurch hergestellt werden, dass die Fotografie zusammen mit Schriftangaben auf einen Träger gedruckt wird und dass dieser Träger anschliessend in durchsichtigen Kunststoffolien eingeschweisst wird. Bei dieser Karte muss die Fotografie zunächst drucktechnisch erfasst werden, und zur eigentlichen Kartenherstellung ist eine spezielle Kunststoffschweissmaschine notwendig. Dies gilt ebenfalls, wenn anstelle des Aufdruckes der Fotografie eine solche eingeschweisst wird.

Bei Ausweiskarten mit Fotografien, welche an vielen verschiedenen Orten ausgegeben werden, insbesondere auch in Entwicklungsländern, ist indes der Aufwand, die Fotografie aufzudrucken und/oder jede Ausgabestelle mit einer Kunststoffschweissmaschine auszurüsten, nicht tragbar. Es besteht daher das Bedürfnis für ein einfaches Herstellungsverfahren. Die Ausweiskarte sollte indes dennoch möglichst fälschungssicher gestaltbar sein. Auch ist es wünschenswert, dass der Karteninhaber seine Unterschrift auf der Karte anbringen kann.

Diese Ziele werden durch ein Herstellverfahren der eingangs genannten Art dadurch erreicht, dass ein mit einem Aufdruck versehener, beschriftbarer, transparenter Kunststoffolienabschnitt auf seiner einen Fläche beschriftet wird und nachfolgend mittels seiner anderen Fläche, welche klebstoffbeschichtet ist, auf einen Kunststoffträger im gewünschen Kartenformat augeklebt wird, wobei beim Aufbringen des Kunststoffolienabschnittes die Fotografie zwischen dem Kunststoffträger und dem Kunststoffolienabschnitt eingebracht wird.

Durch das Aufbringen der bedruckten und beschriftbaren Klebefolie auf den Träger ergibt sich ein einfaches Herstellverfahren, welches ohne maschinelle Einrichtungen auskommt. Der Kunststoffträger kann mit einem Muster bedruckt sein, was die Fälschungssicherheit erhöht. Die Kunststoffolie ist mit einem Aufdruck versehen, welcher die für jede Karte gleichen Angaben und allenfalls eine Laufnummer umfasst. Die Folie kann vom Kartenaussteller mittels einer normalen Schreibmaschine oder eines Druckers mit den Personalien des Karteninhabers endlos beschriftet werden.

Im folgenden sollen Ausführungsbeispiele anhand der Zeichnungen näher erläutert werden. Dabei zeigen:

Fig. 1 ein Band mit mehreren bedruckten und beschriftbaren Folienabschnitten;

Fig. 2 eine in Herstellung befindliche Ausweiskarte;

Fig. 3a - 3c Herstellungsschritte für eine Ausweiskarte.

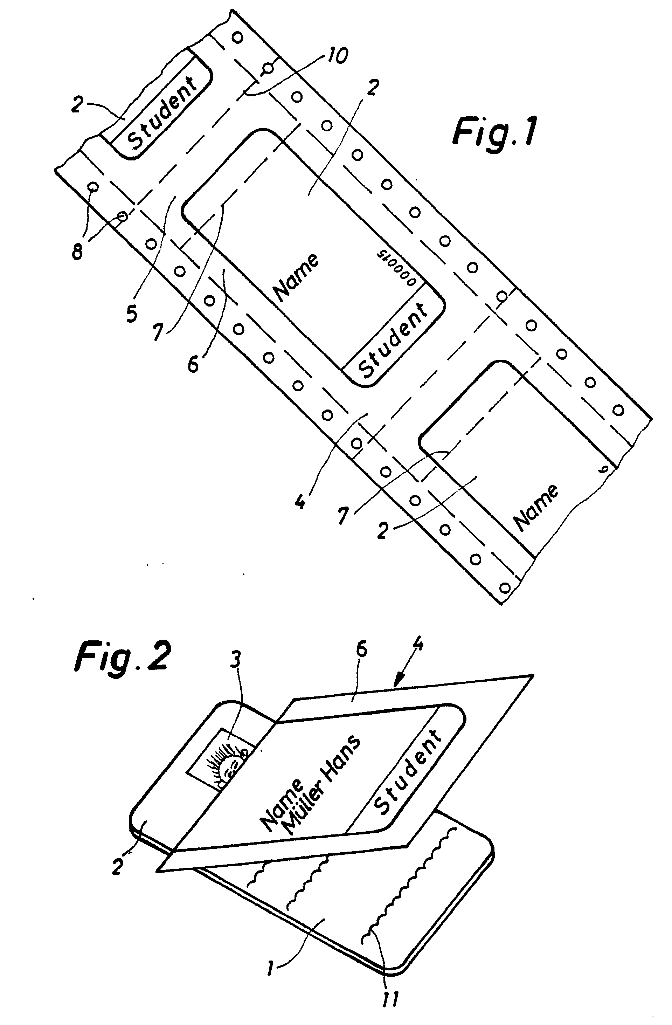

Fig. 1 zeigt einen Teil eines Bandes 4, auf welchem eine Vielzahl von transparenten Kunststoffolienabschnitten 2 in der gewünschten Grösse der Ausweiskarte aufgebracht sind. Das Band 4 ist so ausgeführt, dass die mit einer Klebeschicht versehenen Abschnitte 2 samt der Klebeschicht vom Band abgezogen werden können. Die einzelnen Abschnitte 2 des Bandes sind bedruckbar. Solche Folien sind bekannt und im Handel erhältlich. Sie können in einer Druckerei mit einem Aufdruck versehen werden, im gezeigten Beispiel mit dem Wort "Name", dem Wort "Student" und einer Laufnummer. Natürlich können beliebig gestaltete Aufdrucke mehrfarbig auf die Folie aufgedruckt werden. Das Band ist auch von Hand oder mechanisch beschriftbar. Das die Folienabschnitte 2 tragende Band 4 kann, wie im gezeigten Beispiel, mit Transportlochungen 8 versehen sein. Damit kann das Band 4 zur Beschriftung der Abschnitte 2 sowohl in einer Schreibmaschine eingespannt werden, als auch in einem Drucker mittels Stachelwalzen transportiert werden. Die Folie ist aber auch von Hand beschriftbar. Die einzelnen Abschnitte 2 sind jeweils durch eine Schwächungslinie 10, z.B. einer Perforation des Bandes 4, voneinander getrennt. Eine im Band 4 vorgesehene Trennungslinie 7 erlaubt es, zunächst nur einen Teil 5 des Bandes 4 vom fertig beschrifteten Abschnitt 2 zu lösen, während ein Teil 6 zunächst am Abschnitt 2 verbleibt (System "crack-back"), um dessen Handhabung beim Aufkleben zu erleichtern. Sobald der Abschnitt korrekt positioniert auf dem Kunststoffträger aufgeklebt ist, wird der Bandteil 6 ebenfalls vom Abschnitt 2 abgezogen und dieser vollständig aufgeklebt.

Fig. 2 zeigt eine Ausweiskarte in eben diesem Herstellungsschritt begriffen. Mit 1 ist dabei ein Kunststoffträger bezeichnet. Vorzugsweise ist dieser im Material und in der Grösse entsprechend einer bekannten Kredit- oder Scheckkarte gewählt, welche gemäss einer ISO-Norm genormt sind. Diese genannten Karten sind ca. 8,5 x 5,4 cm gross und ca. 1 mm dick. Vorzugsweise wird die Dicke des Trägers 1 so bemessen, dass die Gesamtdicke von Träger 1 und Folie 2 der Dicke gemäss ISO-Norm entspricht.

Vorzugsweise besteht der Träger aus einem bedruckbaren Kunststoffmaterial. Schematisch ist im gezeigten Beispiel ein aufgedrucktes Wellenmuster 11 gezeigt. Auf diesen Träger 1 wird nun die bedruckte und beschriftete Kunststoffolie mittels deren Klebschicht von Hand aufgeklebt. Dazu wird zunächst der Abschnitt 2, welcher vom Kartenaussteller z.B. mittels Schreibmaschine mit dem Namen des Karteninhabers versehen worden ist, von den anderen Abschnitten 2 des Bandes 4 getrennt. Danach wird durch Abziehen des Abschnittes 5 des Bandes 4 ein Teil der Klebeschicht der Folie 2 freigelegt. Die Folie 2 wird nun von Hand mit diesem Teil randbündig auf dem Träger 1 positioniert. Gleichzeitig wird mittels der Folie 2 die Fotografie 3 abgedeckt, welche bereits vorher auf den Träger 1 aufgelegt oder aufgeklebt worden ist, oder welche im wesentlichen gleichzeitig mit der Folie 2 auf den Träger aufgebracht wird. Das Positionieren der Folie 2 und/oder der Fotografie 3 kann durch auf der Folie und dem Träger aufgedruckte Positionierungsmarken erleichtert werden. Nachdem ein Teil der Folie 2, wie beschrieben, aufgeklebt worden ist, kann der verbleibende Abschnitt 6 des Bandes 4 von der Folie 2 abgezogen werden, wodurch auch der restliche Teil der Klebeschicht freigelegt wird. Die Folie 2 kann nun vollständig auf den Träger 1 aufgeklebt werden. Auf diese Weise ist eine einfache Kartenherstellung möglich. Der Aussteller der Karte erhält bereits bedruckte Träger 1 und Folien 2. Er kann die Folie 2 mit einer normalen Schreibmaschine oder von Hand mit den Personalien versehen. Die eigentliche Kartenherstellung erfolgt dann, ohne dass eine maschinelle Ausrüstung benötigt wird.

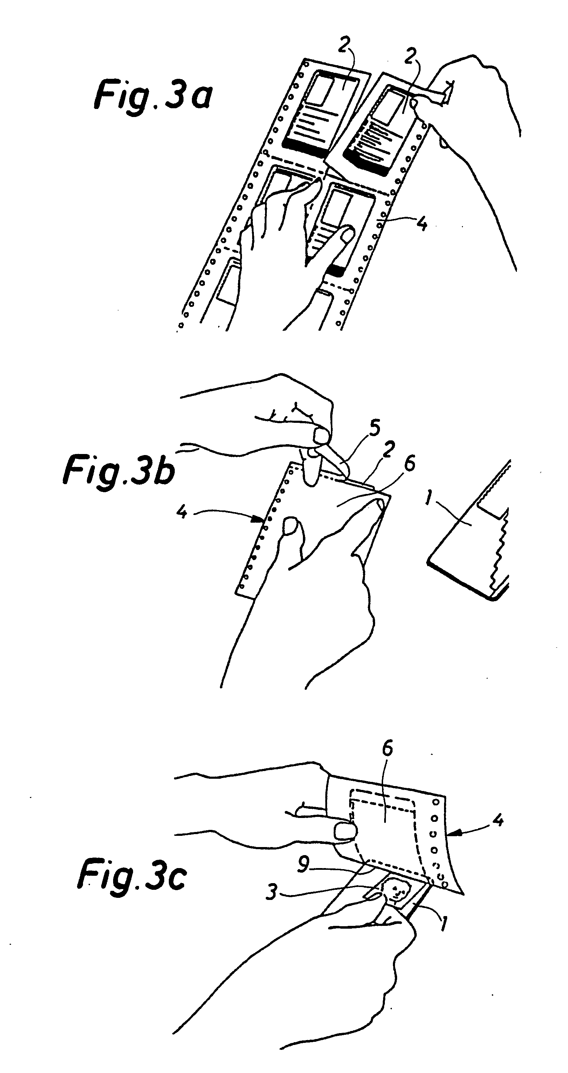

Die Fig. 3a - 3c zeigen einen bevorzugten Herstellungsvorgang.

Fig. 3a zeigt, wie ein beschrifteter Folienabschnitt 2 vom Band 4 gelöst wird. Das Band 4 ist dabei so ausgeführt, dass jeweils zwei Folienabschnitte 2 nebeneinander angeordnet und durch Perforationen trennbar sind.

Fig. 3b zeigt, wie der eine, kleinere Abschnitt 5 des Bandes 4 von der Folie 2 gelöst wird, um die Klebschicht der Folie in diesem Bereich freizulegen. Der mit einem Aufdruck versehen Träger 1 ist nur teilweise dargestellt.

Fig. 3c zeigt den kleinen freigelegten Abschnitt der Folie 2 bereits auf dem Träger 1 aufgeklebt. Dadurch ergibt sich eine Kante 9 quer über den Träger, entlang welcher der noch nicht klebende - und noch mit dem Bandabschnitt 6 abgedeckte - Folienteil in den bereits klebenden Folienteil übergeht. Diese Kante 9 bildet nun einen Anschlag, an welchen die Fotografie 3 mit ihrem einen Rand herangeschoben wird. Damit können die Schritte des Klebens und des Positionierens der Fotografie getrennt werden, was die Arbeit erleichtert. Ist die Fotografie 3 an der Kante 9 positioniert, wird der Abschnitt 6 des Bandes 4 entfernt, und der Rest der Folie wird über die Fotografie auf den Träger aufgeklebt.

Vorzugsweise ist die Folie 2 ein wenig schmaler, z.B. 1 bis 2 mm schmaler, als der Träger 1. Dies erleichtert ein Aufkleben von Hand, wobei sichergestellt ist, dass die Folie 2 nicht über den Träger 1 herausragt.

Sofern dies gewünscht wird, kann der Träger 1 mit einer Prägung versehen sein. Sofern diese Prägung auf der Fläche erhöht ist, auf welcher die Folie 2 aufgeklebt wird, muss an dieser Stelle eine Ausnehmung in der Folie vorgesehen werden, da sonst eine korrekte Klebung durch die Prägung verhindert wird, bzw. die Prägung in einem herkömmlichen Kreditkartenlesegerät nicht mehr wirksam ist. Vorzugsweise erfolgt die Prägung daher so, dass die erhöhten Stellen auf der nicht beklebten Fläche des Trägers 1, d.h. auf der Rückseite der Karte, liegen. Der Träger 1 kann ferner auf bekannten Weise mit einem magnetisch schreib- und lesbaren Streifen versehen sein.

Wird die Fotografie 3 auf den Träger 1 aufgeklebt, so ist eine Manipulation der Karte, bei welcher die Folie 2 abgezogen wird, nicht möglich, ohne dass die Fotografie zerstört wird. Ist die Fotografie nur durch die Folie 2 gehalten, so kann es möglich sein, die Folie 2 samt der Fotografie unbeschädigt zu entfernen. Um dies zu verhindern, können in der Folie 2 Schwächungslinien vorgesehen sein, welche beim Versuch des Abziehens der Folie 2 vom Träger 1 zur Zerstörung der Folie 2 führen.

## Ansprüche

1. Verfahren zur Herstellung einer eine Fotografie tragendenden Ausweiskarte, dadurch gekennzeichnet, dass ein mit einem Aufdruck versehener, beschriftbarer, transparenter Kunststofffolienabschnitt (2) auf seiner einen Fläche beschriftet wird und nachfolgend mittels seiner anderen Fläche, welche klebstoffbeschichtet ist, auf einen Kunststoffträger (1) im gewünschten Kartenformat aufgeklebt wird, wobei beim Aufbringen des Kunststofffolienabschnittes (2) die Fotografie (3) zwischen dem Kunststoffträger (1) und dem Kunststofffolienabschnitt (3) eingebracht wird.

2. Verfahren nach Anspruch 1, dadurch gekennzeichnet, dass der Kunststofffolienabschnitt (2) auf einem die Klebstoffschicht abdeckenden Band (4) angeordnet ist und vor dem Ablösen von dem Band mittels einer Schreibmaschine oder eines Druckers beschriftet wird.

3. Verfahren nach Anspruch 2, dadurch gekennzeichnet, dass das die Klebstoffschicht abdekkende Band (4) in zwei separat lösbare Abschnitte (5,6) unterteilt ist, wobei zunächst der eine Abschnitt (5) entfernt und der entsprechende Kunststoffolienabschnitt auf den Träger (1) aufgeklebt wird, im folgenden die Fotografie auf dem Träger (1) derart angeordnet wird, dass ihre eine Kante bündig an den bereits klebenden Abschnitt der Kunststoffolie anschliesst und nachfolgend der zweite Abschnitt (6) des Bandes (4) entfernt und der Rest der Kunststoffolie aufgeklebt wird.

4. Ausweiskarte, hergestellt nach dem Verfahren nach einem der Ansprüche 1 bis 3.

5. Ausweiskarte nach Anspruch 4, dadurch gekennzeichnet, dass der Kunststoffträger (1) bedruckbar und/oder prägbar ist.

6. Ausweiskarte nach Anspruch 4 oder 5, dadurch gekennzeichnet, dass der Kunststoffträger (1) auf seiner der Folie (2) abgewandten Seite mit einem Magnetstreifen versehen ist.

7. Ausweiskarte nach einem der Ansprüche 4 bis 6, dadurch gekennzeichnet, dass der Kunststoffträger in Länge und Breite der ISO-Norm für Kreditkarten bzw. maschinenlesbare Karten entspricht und dass der Kunststoffträger (1) und die Kunststoffolie (2) zusammen eine Dicke aufweisen, welche der Dicke gemäss dieser ISO-Norm entspricht.

8. Ausweiskarte nach einem der Ansprüche 4 bis 7, dadurch gekennzeichnet, dass die Kunststoffolie (2) weniger breit ist als der Kunststoffträger (1).

*Fig. 1*

*Fig. 2*

*Fig.3a*

*Fig.3b*

*Fig.3c*